# FASCICULE DE BREVET EUROPEEN

(11) **EP 3 405 435 B1**
(45) Date de publication et mention de la délivrance du brevet: **01.06.2022**
(21) Numéro de dépôt: 17700862.0
(22) Date de dépôt: 23.01.2017
(51) Int. Cl.: C02F 1/28, C02F 1/78, C02F 3/12, C02F 9/00, C02F 3/28, C02F 3/08, C02F 1/52

(54) **PROCEDE ET INSTALLATION DE TRAITEMENT DES EAUX USEES**
ABWASSERBEHANDLUNGSVERFAHREN UND ANLAGE
WASTEWATER TREATMENT PROCESS AND PLANT

(30) Priorité: 21.01.2016 FR 1650489
(43) Date de publication de la demande: 28.11.2018
(73) Titulaire: Suez International, 92040 Paris la Défense Cedex (FR)
(72) Inventeur: GONZALEZ OSPINA, Adriana, 78360 Montesson (FR); DOMENJOUD, Bruno, 92800 Puteaux (FR)
(74) Mandataire: IPAZ
(86) Numéro de dépôt international: PCT/EP2017/051314
(87) Numéro de publication internationale: WO 2017/125603

(56) Documents cités:
- DE-A1- 19 614 306
- FR-A1- 3 015 463
- US-A- 5 302 288
- US-A1- 2003 132 160

## Description

L'invention se rapporte au domaine du traitement des eaux superficielles, souterraines, résiduaires ou industrielles contenant des micropolluants.

L'invention a pour objet plus particulièrement un procédé et une installation pour traiter les eaux précitées en éliminant les composés micropolluants persistants tels que les résidus des substances chimiques naturelles ou synthétiques, les pesticides, les métaux, les composés organiques volatiles COV, les hormones, les résidus des médicaments.

Les exigences de préservation des ressources en eau ont menées au déploiement de systèmes de traitement des eaux usées orientés sur des paramètres globaux. Aujourd'hui, l'Union européenne ambitionne de reconquérir la bonne qualité des milieux aquatiques. La Directive 2000/60/CE du Parlement européen et du Conseil du 23 octobre 2000, établissant un cadre pour une politique communautaire dans le domaine de l'eau, appelée Directive Cadre sur l'Eau DCE, ambitionne de réduire progressivement à long terme des rejets de contaminants des eaux usées dans les milieux récepteurs aquatiques. Des boues d'épuration sont également produites au cours du traitement des eaux usées. Les concernant, la Directive 91/271/CEE du Conseil du 21 mai 1991, relative au traitement des eaux urbaines résiduaires, vise à encourager la valorisation des boues dès que possible. L'objectif de bon état chimique et écologique pour toutes les masses d'eau européennes implique l'adoption de mesures visant à contrôler les rejets, émissions et pertes pour les produits chimiques identifiés au niveau européen comme substances prioritaires et substances dangereuses prioritaires et fixés au niveau local / du bassin fluvial / national pour des substances pertinentes déterminées sur la base d'inventaires.

Les stations d'épuration constituent le principal point de collecte et ultérieurement de rejet de micropolluants dans l'environnement. Ces micropolluants appartiennent à différentes catégories qui reflètent toutes les utilisations de l'eau et leur diffusion dans l'environnement : produits chimiques domestiques et industriels et leurs sous-produits, pesticides, produits pharmaceutiques et produits de soins personnels. Les résultats publiés concernant les divers inventaires nationaux indiquent que la conception et le fonctionnement usuels des stations d'épuration biologique permettent une réduction limitée de la charge globale en micropolluants.

Plusieurs projets de recherche et d'essais opérationnels ont comparé les performances des procédés de traitement des micropolluants en mode tertiaire, c'est-à-dire en aval du traitement d'oxydation biologique.

Ainsi, le programme de recherche opérationnel Français ARMISTIQ a quantifié les performances de traitement d'un panel de micropolluants par oxydation et adsorption sur charbon actif.

Margot et al., 2013, résume les résultats suisses des essais comparatifs réalisés sur la station d'épuration de Vidy à Lausanne avec de l'ozone et du charbon actif en poudre suivi d'ultra-filtration. Les deux concluent à des capacités élevées de traitement de l'ozone et du charbon actif bien qu'ils n'agissent pas exactement sur les mêmes micropolluants. L'ozone est plus spécifique, l'adsorption peut toucher un spectre plus large de composés mais avec un niveau de performances plus bas.

Margot J. et al. « Treatment of micropollutants in municipal wastewater: ozone or powdered activated carbon ? », Science of the Total Environment, 461-462 480- 498 2013.

Le traitement tertiaire des micropolluants est donc techniquement et économiquement viable et peut avoir lieu en utilisant les deux technologies existantes d'adsorption sur charbon actif et d'ozonation. Les performances peuvent être équivalentes et élevées à condition de mettre en adéquation le taux de traitement en ozone et de charbon actif dose renouvelée de charbon actif en poudre ou volume de CAG et fréquence de régénération, le type des micropolluants à traiter et l'objectif ultime de performance de traitement à atteindre.

Selon d'autres approches davantage centrées sur la mise en œuvre de réactions d'adsorption, des procédés basés sur l'adsorption sur du charbon actif ont été développés pour éliminer les micropolluants, initialement pour la production d'eau potable puis pour le traitement des eaux usées clarifiées. Les procédés utilisés à ce jour pour l'adsorption mettent en œuvre des charbons actifs en grain, en poudre ou en micro-grain avec des réacteurs de contact incluant ou non une étape de clarification dans le même ouvrage. Un temps de contact entre l'eau et le charbon est nécessaire afin d'assurer une adsorption efficace. Cela engendre une emprise au sol minimale qui peut être plus au moins importante selon si le réacteur a ou non la possibilité de clarifier l'eau pour séparer le charbon actif de l'eau traitée.

A titre d'exemple, la demande de brevet FR 2874 913 décrit un réacteur mettant en œuvre du charbon actif en micro-grain pour le traitement des micropolluants organiques contenus dans les eaux souterraines ou de surface ayant une faible pollution organique. Le traitement, destiné à rendre les eaux potables, a lieu dans un réacteur ascendant contenant un lit mobile de charbon actif expansé. Au sein du même réacteur est réalisée la séparation de l'eau traitée de la suspension de charbon de manière gravitaire. Ce procédé prévoit le renouvellement ou la régénération in situ du lit de charbon en micro-grain par l'extraction d'une partie de la masse de charbon et l'injection du charbon actif en micro-grain neuf. Une partie du charbon extrait peut également être réinjecté dans le réacteur après avoir été régénéré.

Les réacteurs décrits par la demande de brevet FR 2946 333 mettent en œuvre du charbon actif en poudre coagulé et floculé pour le traitement des eaux plus chargées que celles citées précédemment. Le traitement a lieu dans un réacteur unique à flux ascendant.

La demande de brevet FR 2973 794 décrit un procédé de traitement par clarification comprenant une adsorption d'une portion d'eau clarifiée et une clarification d'un mélange d'eau clarifiée et d'eau à traiter. Le procédé associe la coagulation, la floculation et la décantation lestée de l'eau à traiter afin de garantir des faibles concentrations en carbone organique dissous dans l'eau traitée.

Selon d'autres approches davantage centrées sur la mise en œuvre de l'oxydation à l'ozone, des procédés mettent en œuvre des installations comprenant la production de l'ozone et la mise en contact de l'ozone produit avec l'eau secondaire clarifiée à traiter dans un ouvrage spécifique. Ces réacteurs sont principalement de type colonne de contact compartimentés à forte hauteur d'eau pour favoriser le transfert de l'ozone. Ce dernier est injecté en bas de colonne à l'aide de diffuseurs pour produire des fines bulles. Pour assurer une oxydation efficace et le meilleur taux de transfert en ozone, il est nécessaire d'opérer le contact entre l'eau et l'ozone pendant un temps suffisamment long ce qui implique des réacteurs d'une certaine taille.

Dans un souci d'optimisation et d'élargissement du domaine de traitement, d'autres solutions, telles que celle décrite dans la demande de brevet US005578205A, ont été développées en associant plusieurs agents oxydants en oxydation avancée POA. Le document décrit une installation pour l'élimination partielle des micropolluants des eaux de forage par combinaison de l'action de l'ozone et du peroxyde d'hydrogène. Plus particulièrement l'installation est destinée à traiter des composés réfractaires à l'ozone moléculaire du type pesticides ou biocides, au travers de la génération d'un oxydant plus puissant mais non sélectif qui est le radical hydroxyle dans un réacteur simplifié de contact injecteur/mélangeur/contacteur.

D'autres voies ont été explorées comme celles qui consistent à intégrer différents mécanismes de traitement. Par exemple, l'ajout de charbon actif dans un traitement biologique secondaire pour l'épuration des eaux urbaines comme réalisé lors des travaux opérationnels sur la station du Locle Traitement des micropolluants par dosage de charbon actif en poudre dans la boue activée d'un MBR (Rapport final sur les essais pilotes à la STEP du Locle, Déc 2014).

A titre d'exemple, le brevet WO 20017053110A1 propose un traitement en deux étapes associant un prétraitement de l'eau résiduaire par ozonation dans un réacteur dans lequel l'eau est maintenue en contact avec de l'ozone durant une période comprise entre 1 et 6 heures suivi d'un traitement biologique pour le traitement des eaux industrielles.

Toutefois ces solutions développées présentent des inconvénients principalement liés à la spécificité d'affinité entre les mécanismes mis en œuvre et les caractéristiques physico-chimiques des micropolluants.

Ainsi, pour ce qui est de l' ozonation tertiaire, la mise en contact de la phase gazeuse (ozone) et de la phase liquide (effluent à traiter) entraîne la présence d'un ouvrage de contact (ou contacteur). Le contacteur à une forte emprise au sol ce qui est un inconvénient notamment dans les zones urbaines ou sur les stations d'épuration déjà existantes.

De plus, la présence de sous-produits d'oxydation potentiellement toxiques dans l'eau traitée résultants de l'action de l'ozone peut être indésirable selon le point de rejet (milieu naturel sensible) ou l'usage ultérieur. La formation de sous-produits toxiques indésirables apparaît être reliée à la dose d'ozone notamment dans le cas de la formation de bromates. Ces derniers se forment de manière significative lorsque l'eau à traiter contient des bromures et que la dose d'ozone excède la demande immédiate en ozone de l'eau à traiter (demande immédiate en ozone : dose d'ozone transférée à partir de laquelle apparaît de l'ozone dissous). Il existe donc un risque non négligeable de formation de sous-produits potentiellement toxiques.

Enfin, l'élimination des micropolluants organiques est directement liée à la dose d'ozone transférée ainsi qu'à la réactivité des substances. L'ozone oxyde les micropolluants organiques de manière sélective. Son application à faible dose n'aura donc un effet positif presque exclusivement que sur les composés réactifs et non sur les autres.

L'utilisation de l'ozone en prétraitement de l'eau résiduaire industrielle présente l'inconvénient d'avoir une emprise au sol élevée (succession des traitements avec une étape d'ozonation nécessitant un temps de contact élevé compte tenu des doses d'ozone qui sont nécessaires pour ce type d'application).

Concernant maintenant l'utilisation du charbon actif en tertiaire (c'est-à-dire en aval du traitement biologique), il s'avère que la mise en contact du charbon actif et de l'eau à traiter nécessite un ouvrage de contact et un ouvrage de séparation le cas échéant (dans le cas de l'utilisation de charbon actif en poudre). De ce fait, l'emprise au sol est rendue trop importante.

Par ailleurs, le charbon actif adsorbe les composés organiques de manière sélective ne retenant que les composés « adsorbables ». Les doses de charbon doivent être augmentées fortement pour que les composés faiblement adsorbables soient retenus de manière significative.

Concernant maintenant l'utilisation du charbon actif en poudre dans la biologie, le procédé consistant à appliquer en tertiaire du charbon actif en poudre peut aussi faire intervenir une recirculation du charbon actif en poudre dans le système de traitement biologique secondaire. Cette variante améliorée du procédé par charbon actif en poudre tertiaire, bien que profitable d'un point de vue performances, fait toujours intervenir un ou plusieurs ouvrages en aval du procédé de traitement biologique. Ce traitement aval restant à dose d'injection de charbon actif en poudre identique. Les inconvénients restent dès lors l'emprise au sol et la non-optimisation des doses de charbon actif en poudre utilisées en tertiaire. US 5302288 et DE 19614306 divulguent des procédés biologiques de traitement des eaux usées du type boues activées, comprenant l'introduction de l'ozone et d'un composé adsorbant.

L'invention a donc pour but d'éliminer tout ou partie des inconvénients mentionnés ci-avant. L'objet de cette invention est aussi d'élargir la gamme des micropolluants traitables par un seul système avec une optimisation des doses de traitement. Elle repose sur l'association de l'adsorption sur un composé adsorbant comme le charbon actif avec l'ozonation dans un procédé d'épuration biologique.

Plus particulièrement, l'invention a pour objet un procédé de traitement des eaux usées selon la revendication 1.

L'introduction d'ozone induit une ozonation. L'introduction d'adsorbant induit une adsorption. Les deux réactions, couplées à l'oxydation biologique ou à la bioassimilation dans le réacteur biologique, permettent d'assurer le traitement d'un large spectre de micropolluants.

Des caractéristiques optionnelles de l'invention, complémentaires ou de substitution sont énoncées ci-après.

En aval de l'unité de traitement biologique, on peut ne procéder à aucune introduction d'ozone ou de composé adsorbant, de sorte que l'ozone et le composé adsorbant sont respectivement chacun introduit en amont de l'unité de traitement biologique, et dans l'unité de traitement biologique.

L'introduction du composé adsorbant peut s'effectuer en aval de l'introduction de l'ozone.

Le composé adsorbant peut comporter du charbon actif en poudre (CAP), ou en grain ou en micro grain.

Le composé adsorbant peut comporter des résines échangeuses d'ions ou des zéolithes.

L'ozone peut être introduit dans des proportions allant de 0 à 25 mg/L, de préférence entre 1,5 et 15mg/l.

Le composé adsorbant peut être introduit dans des proportions allant de 0 à 30 mg/L, de préférence entre 5 et 20 mg/L.

L'unité de traitement biologique peut comporter un réacteur à boues activées conventionnel ou un réacteur à lit mobile fluidisé ou un réacteur à lit fixe.

L'unité de traitement biologique comporte un réacteur biologique dans lequel peut être effectuée l'introduction d'ozone et/ou de composé adsorbant.

L'unité de traitement biologique comprend un séparateur du type décanteur ou flottateur en aval du réacteur biologique, l'introduction d'ozone et/ou de composé adsorbant, pouvant alors être effectuée dans le séparateur.

L'unité de traitement biologique comprend un séparateur du type décanteur ou flottateur, en aval du réacteur biologique et un circuit de recirculation d'une fraction des boues issues de l'étape de décantation vers le réacteur biologique, l'introduction d'ozone et de composé adsorbant étant effectuées dans le circuit de recirculation ou dans le séparateur, ou bien dans les deux.

L'invention a également pour objet une installation de traitement des eaux usées selon la revendication 11.

Des caractéristiques optionnelles de l'invention, complémentaires ou de substitution sont énoncées ci-après.

Le premier et le deuxième dispositif d'introduction peuvent être agencés pour introduire respectivement de l'ozone et un composé adsorbant, dans le circuit d'alimentation du réacteur biologique et dans l'unité de traitement biologique.

Le premier dispositif d'introduction d'ozone peut être agencé en amont du deuxième dispositif d'introduction d'adsorbant.

L'unité de traitement biologique peut comprendre en outre un séparateur en aval du réacteur biologique, le séparateur pouvant être du type décanteur ou flottateur, et au moins l'un ou l'autre du premier ou du deuxième dispositif d'introduction étant en communication avec le séparateur.

L'unité de traitement biologique peut comprendre en outre un séparateur et un circuit de recirculation d'une fraction des boues issues du séparateur vers le réacteur biologique, au moins l'un ou l'autre du premier ou du deuxième dispositif d'introduction étant en communication avec le circuit de recirculation.

L'installation de traitement des eaux usées peut comporter en aval de l'unité de traitement biologique, comme premier ou bien deuxième dispositif d'introduction, un contacteur agencé pour mettre en contact les eaux en sortie de ladite unité de traitement avec soit l'ozone, soit le composé adsorbant.

Le réacteur biologique peut être un réacteur à boues activées conventionnel ou un réacteur à lit mobile fluidisé ou un réacteur à lit fixe.

L'un et/ou l'autre du premier ou du deuxième dispositif d'introduction d'ozone ou d'adsorbant peut être en communication avec le réacteur biologique.

D'autres avantages et particularités de l'invention apparaîtront à la lecture de la description détaillée de mises en œuvre et de modes de réalisation nullement limitatifs, et des dessins annexés suivants :
- les FIGURES 1A à 1H correspondent chacun à une représentation schématique de divers modes de réalisation,
- la FIGURE 2 correspond à une représentation schématique d'une unité de traitement biologique selon un mode de réalisation de l'invention,

Le procédé de traitement des eaux usées, selon l'invention comprend au moins une étape d'oxydation biologique dans une unité 10 de traitement biologique par boues activées. On entend par « étape d'oxydation biologique » une étape du traitement des eaux usées dans laquelle des micro-organismes aérobie oxydent en présence d'oxygène les composés polluants, de manière à les dégrader. Il peut s'agir d'un traitement aérobie nécessitant un apport d'oxygène ou bien anoxie ou anaérobie, cas où les microorganismes puisent l'énergie dans leurs réserves pour leur activité et reproduction.

Selon le procédé, on introduit de l'ozone et un composé adsorbant dans l'unité de traitement biologique 10 doté d'un réacteur biologique 3, ou bien en amont de l'unité de traitement biologique 10, ou bien en aval de l'unité de traitement biologique 10, sachant qu'en aval de l'unité de traitement biologique 10, on procède au plus, soit à l'introduction d'ozone, soit à l'introduction du composé adsorbant. De cette façon, l'étape d'oxydation biologique conduite par les microorganismes est renforcée par une étape d'ozonation et une étape d'adsorption, les étapes précitées étant concomitantes ou bien se succédant. On entend par « en amont de l'unité de traitement biologique », le fait que l'ozone et/ou le composé adsorbant sont introduits en amont du réacteur biologique 3, soit par exemple dans le circuit qui amène les eaux à traiter dans le réacteur.

On entend par « en aval de l'unité de traitement biologique », le fait que l'ozone et/ou le composé adsorbant sont introduits au-delà de la sortie de l'unité de traitement, c'est-à-dire au moins dans le circuit d'évacuation ou après.

On entend par « ozonation » un traitement chimique par oxydation, soit directes, avec la molécule O3 (très sélective), soit indirectes, du fait de l'action d'espèces secondaires comme les radicaux libres OH- formés par la décomposition de l'ozone au contact de l'eau.

On entend par « adsorption », l'élimination de composés (principalement matière organique et micropolluants) qui s'opère grâce à un phénomène surfacique par lequel les molécules se fixent sur des sites poreux du charbon actif par l'intermédiaire de différentes forces (charges électriques, interaction dipôle-dipôle, forces de Van der Waals) ou liaisons (hydrogènes, covalentes, etc.). L'adsorption peut être soit physique (non spécifique) et dépendre essentiellement de la taille du site poreux, soit chimique (spécifique) due à la présence de sites chargés sur la surface du charbon actif.

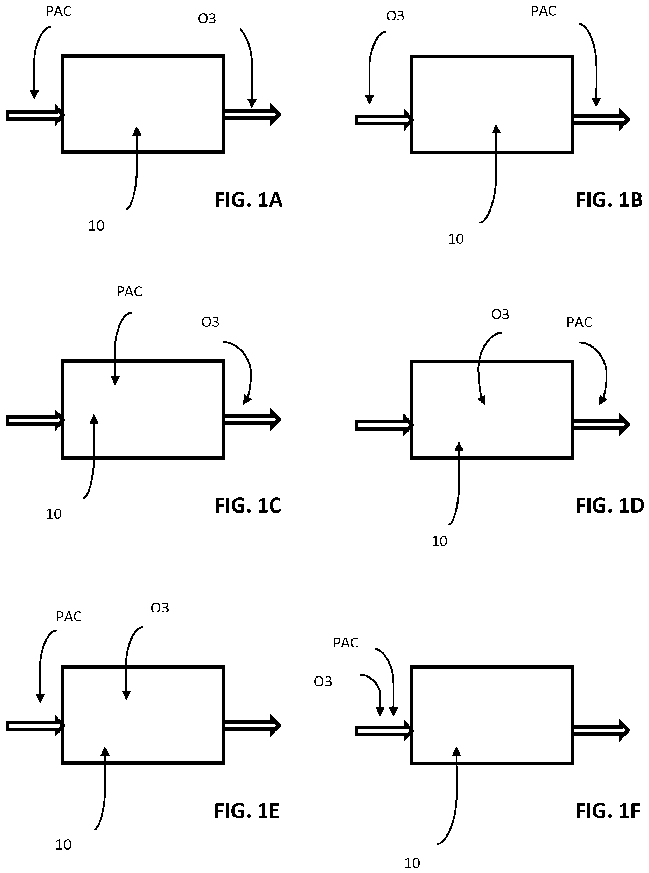

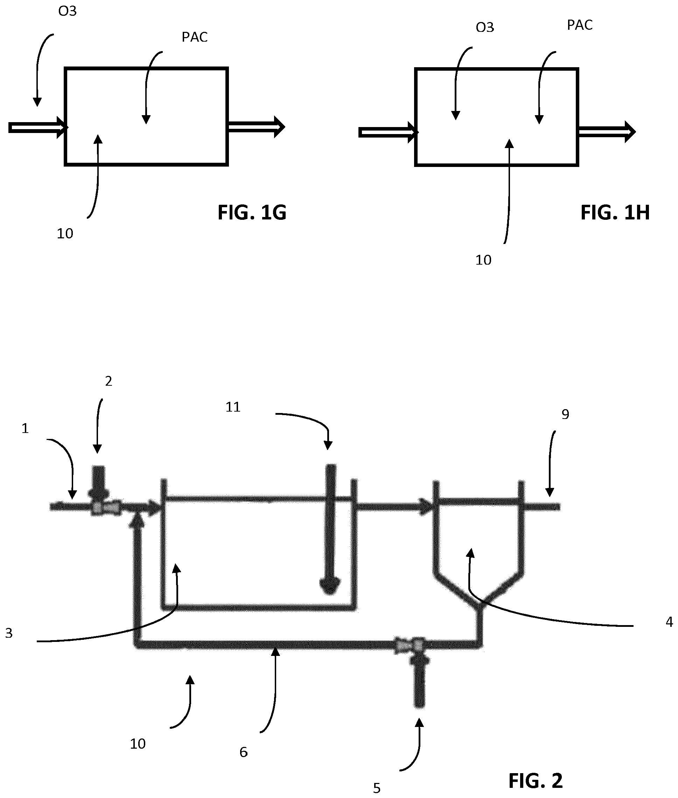

Les différentes configurations possibles sont détaillées aux FIGURES 1A à 1H, avec plus précisément :
- En FIGURE 1A, pas selon l'invention, l'introduction de composé adsorbant en amont de l'unité de traitement biologique 10, et l'introduction d'ozone en aval de l'unité de traitement biologique 10. De cette façon, l'adsorption agit en synergie avec la bio-transformation au sein du réacteur biologique de l'unité de traitement biologique 10.
- En FIGURE 1B, pas selon l'invention, l'introduction de composé adsorbant en aval de l'unité de traitement biologique 10, et l'introduction d'ozone en amont de l'unité de traitement biologique 10. De cette façon, l'ozonation agit en synergie avec la bio-transformation au sein du réacteur biologique.
- En FIGURE 1C, l'introduction de composé adsorbant dans l'unité de traitement biologique 10, et l'introduction d'ozone en aval de l'unité de traitement biologique 10. De cette façon, l'adsorption agit en synergie avec la bio-transformation au sein du réacteur biologique.
- En FIGURE 1D, l'introduction de composé adsorbant en aval de l'unité de traitement biologique 10, et l'introduction d'ozone dans l'unité de traitement biologique 10. De cette façon, l'ozonation agit en synergie avec la bio-transformation au sein du réacteur biologique.
- En FIGURE 1E, l'introduction de composé adsorbant en amont de l'unité de traitement biologique 10, et l'introduction d'ozone dans l'unité de traitement biologique 10. De cette façon, l'ozonation et l'adsorption agissent en synergie avec la bio-transformation au sein du réacteur biologique.
- En FIGURE 1F, pas selon l'invention, l'introduction de composé adsorbant et d'ozone en amont de l'unité de traitement biologique 10. De cette façon, l'ozonation et l'adsorption agissent en synergie avec la bio-transformation au sein du réacteur biologique.
- En FIGURE 1G, l'introduction de composé adsorbant dans l'unité de traitement biologique 10, et l'introduction d'ozone en amont de l'unité de traitement biologique 10. De cette façon, l'ozonation et l'adsorption agissent en synergie avec la bio-transformation au sein du réacteur biologique.
- En FIGURE 1H, l'introduction de composé adsorbant et d'ozone dans l'unité de traitement biologique 10. De cette façon, l'ozonation et l'adsorption agissent en synergie avec la bio-transformation au sein du réacteur biologique.

Selon des modes de réalisation préférentiels correspondant à ceux décrits en FIGURES 1E, 1G, 1H, on ne procède à aucune introduction d'ozone ou de composé adsorbant en aval de l'unité de traitement biologique 10, de sorte que l'ozone et le composé adsorbant sont respectivement chacun introduit en amont de l'unité de traitement biologique 10, et dans l'unité de traitement biologique 10. Ces configurations ont pour avantage en termes de procédé, de faciliter l'oxydation conduite par les microorganismes puisque la dégradation et le piégeage des micropolluants par l'ozone et le composé adsorbant interviennent avant ou pendant l'oxydation biologique. En d'autres termes, l'ozonation et le traitement d'adsorption ne succèdent pas de préférence à l'étape d'oxydation biologique, mais apportent plutôt un concours synergique à l'étape d'oxydation biologique, optimisant ainsi le rendement de l'unité de traitement 10.

De manière avantageuse, l'introduction du composé adsorbant s'effectue en aval de l'introduction de l'ozone. De cette façon, le composé adsorbant piège d'avantage de composés organiques réfractaires à l'ozone et/ou à la bio-transformation, dans la mesure où l'étape d'ozonation a déjà dégradé un certain nombre de composés organiques.

L'adsorbant peut être choisi parmi tout type d'adsorbant connu de l'homme du métier tel que du charbon actif (quelle que soit sa granulométrie) ou de la résine. Le composé adsorbant peut aussi comporter des résines échangeuses d'ions ou des zéolithes. De préférence, l'adsorbant est un charbon actif en poudre. La mise en œuvre d'un tel adsorbant permet d'utiliser ou de réutiliser de manière optimale le charbon actif, le charbon actif en poudre étant un matériau relativement onéreux. On ajustera la quantité et la nature de la poudre de charbon actif en fonction de la qualité des eaux à traiter. La performance de la poudre de charbon actif est fortement conditionnée par les caractéristiques physico-chimiques inhérentes aux micropolluants et à la matière organique à traiter (quantité, taille, poids moléculaire, hydrophobicité, charge, etc.), les caractéristiques du matériau utilisé (pour un charbon actif : degré d'activation, porosité et distribution de la taille des pores, surface spécifique, charge, structure, matière première à l'origine du charbon, etc.), et les caractéristiques des paramètres de fonctionnement de l'installation (débit, utilisation de coagulants et de floculants, pH, temps de contact hydraulique/vitesse de passage, temps de résidence dans le réacteur, etc.).

De manière préférentielle, l'ozone est introduit dans des proportions allant de 0 à 25 mg/L, de préférence entre 3 et 15 mg/L, cette quantité étant exprimée en fonction du point d'introduction de l'ozone. Ainsi, en aval du traitement biologique on peut privilégier l'intervalle entre 0 et 15 mgO3/L d'eau brute, dans les boues re-circulées l'intervalle entre 0,2 et 1,6 mgO3/g de boues re-circulées, et en aval du traitement biologique entre 1,5 et 5 mgO3/L d'eau. De cette manière, on obtient l'avantage d'agir de manière sélective sur chaque point de contact entre l'ozone et la matière à traiter tout en utilisant la dose strictement nécessaire.

De manière tout aussi préférentielle, le composé adsorbant est introduit dans des proportions allant de 0 à 30 mg/L d'eau brute, et de préférence entre 5 et 20mg/L. De cette manière, on élargit de manière significative les surfaces d'adsorption auxquelles les micropolluants peuvent s'attacher par les liaisons physico-chimiques caractéristiques de ce phénomène. Cela engendre une augmentation de la performance d'adsorption comparativement au traitement biologique seul.

La synergie entre l'ozone et le composé adsorbant introduits est d'autant plus marquée dans les intervalles préférentiels mentionnés précédemment, puisque les proportions allant de 0 à 25 mg/L, de préférence entre 3 et 15 mg/L pour l'ozone et allant de 0 à 30 mg/L, et de préférence entre 5 et 20mg/L, pour le composé adsorbant, permettent d'obtenir un très bon abattement dans l'élimination des principaux composés.

Concernant l'installation de traitement des eaux usées, l'invention prévoit, telle que représenté en FIGURE 2, une unité de traitement biologique 10 dotée d'au moins un réacteur biologique 3 agencé pour réaliser au moins une étape d'oxydation biologique par boues activées. Cette unité de traitement biologique est alimentée par un circuit d'arrivée 1 d'eaux usées alimentant le réacteur biologique 3 en eaux résiduaires. L'eau traitée sort de l'unité de traitement biologique via un circuit d'évacuation 9 des eaux traitées hors de ladite unité de traitement biologique. Selon l'invention, l'installation comprend en outre au moins un premier et un deuxième dispositif pour introduire respectivement de l'ozone et un composé adsorbant, dans le circuit d'arrivée 1, tel que représenté avec la référence 2 dans la FIGURE 2 ou bien dans le circuit d'évacuation 9, ou bien dans l'unité de traitement biologique 10 avec la référence 11 qui introduit l'ozone et / ou le composé adsorbant dans le réacteur 3. Le premier et le deuxième dispositif pour introduire respectivement de l'ozone et un composé adsorbant, peuvent être par exemple un injecteur ou un mélangeur statique installé dans le circuit d'arrivée 1 sans qu'un contacteur spécifique ne soit nécessaire. En revanche, dans le cas où le dispositif d'introduction d'ozone ou de composé adsorbant intervient dans le circuit d'évacuation 9, il peut conserver alors la forme d'un injecteur /mélangeur ou prendre celle d'un contacteur spécifique.

L'ensemble des configurations possibles est décrit dans les FIGURES 1A à 1H détaillées précédemment.

On entend par « unité de traitement biologique » une entité comprenant au moins un réacteur biologique muni de moyens d'admission 1 et de moyens d'évacuation 9. Le réacteur biologique 3 peut être par exemple un réacteur à boues activées conventionnel ou un réacteur à lit mobile fluidisé ou un réacteur à lit fixe.

On entend par « réacteur à boues activées conventionnel », un bassin d'aération auquel succède généralement un clarificateur, l'épuration des eaux usées s'effectuant ainsi suivant une succession de bassins disposés les uns derrières les autres.

On entend par « réacteur à lit mobile fluidisé » un bassin d'aération (ou à aération séquencée) dans lequel sont immergés des matériaux supports maintenus en fluidisation pas l'apport d'air de procédé et permettant d'augmenter la quantité de biomasse épuratrice, celle qui se développe sur les surfaces des matériaux immergés. De cette manière, on obtient l'avantage d'augmenter la capacité de traitement vis-à-vis d'un réacteur biologique à boues activées conventionnel en conférant pour la même charge à traiter, un volume de réacteur plus faible.

On entend par « réacteur à lit fixe » des filtres garnis de matériaux minéraux par au sein desquelles traverse l'eau à épurer. De cette manière, on obtient l'avantage de filtrer en même temps l'eau épurée en une seule étape de traitement.

On entend par « réacteur biologique séquentiel » un dispositif de traitement à culture libre dans lequel les étapes de traitement sont séparées dans le temps et non dans l'espace. Alternativement sont réalisées, l'alimentation en eau à traiter puis les phases réactionnelles suivies de clarification de l'eau par décantation statique et la vidange de l'eau traitée. De cette manière, pas selon l'invention, on obtient l'avantage d'avoir une grande compacité dans les ouvrages de traitement.

On entend par « bioréacteur à membrane » le traitement biologique par boues activées couplé à la clarification de l'eau par des membranes d'ultra ou de microfiltration. De cette manière, pas selon l'invention, on obtient une eau clarifiée de haute qualité et les avantages induits de la désinfection apportés par la membrane.

Les réacteurs à boues activées conventionnels ou les réacteurs à lit fixe présentent l'avantage d'être des installations très répandues et de fonctionnement simple. Ainsi, l'invention peut être mise en œuvre sans grande modification et repose sur des ouvrages classiques de fonctionnement simple. L'injection synergique de l'ozone et d'adsorbant autour du ou dans le réacteur biologique permet de s'affranchir de l'utilisation d'un contacteur spécifique et donc de réduire l'empreinte au sol d'une installation de ce type.

Les réacteurs à lit mobile fluidisé et les bioréacteurs à membranes sont plus récents et présentent de bons rendements. Toutefois, les réacteurs à lit mobile fluidisé nécessitent un apport d'énergie important qui n'est plus justifié dans le cadre de l'invention compte tenu de la synergie liée à l'introduction de charbon actif et d'ozone. Concernant les réacteurs à membrane, ne faisant pas partie de l'invention, sur le long terme, l'utilisation de charbon actif pourrait occasionner un phénomène d'abrasion de la membrane. Ainsi la peau membranaire pourrait être endommagée par l'utilisation de charbon actif et diminuer l'efficacité du réacteur et/ou aller à l'encontre effet positif utilisation du charbon actif.

Toujours selon l'invention, le circuit d'évacuation 9 est tout au plus en communication avec l'un ou l'autre du premier ou du deuxième dispositif d'introduction. En d'autres termes, il n'est pas prévu d'introduire dans le circuit d'évacuation 9, à la fois de l'ozone et du charbon actif.

L'unité de traitement biologique 10 comprend un séparateur du type décanteur ou flottateur 4 en aval du réacteur biologique 3 et un circuit 6 de recirculation d'une fraction des boues issues de l'étape de décantation vers le réacteur biologique 3. Les eaux résiduaires sortant du réacteur biologique 3 sont alors acheminées vers le séparateur 4, aussi appelé clarificateur ou bassin de décantation secondaire ou clarificateur, ou encore un séparateur de type flotatteur, monté en aval du réacteur biologique 3. Le séparateur 4 est agencé pour réaliser une étape de décantation dans laquelle on sépare typiquement des flocs biologiques des eaux résiduaires, ces flocs biologiques étant constitués lors de l'au moins une étape de traitement biologique, au sein du réacteur biologique 3.

Le procédé selon l'invention offre la possibilité de procéder à l'injection d'ozone et / ou de charbon actif au moyen de l'un ou l'autre du premier ou du deuxième dispositif d'introduction, directement dans le circuit de recirculation 6. C'est ce que représente la référence 5 en FIGURE 2.

Le procédé selon l'invention offre également la possibilité de procéder à l'injection d'ozone et / ou de charbon actif directement dans le séparateur. Ainsi dans le cas où le séparateur est un flottateur, on peut injecter de l'ozone ou du charbon actif directement dans ce flottateur (non représenté en FIGURE 2).

Ceci est particulièrement intéressant derrière un réacteur du type bioréacteur à lit mobile fluidisé (MBBR) qui a besoin de séparer l'eau traitée de la biomasse et permet d'améliorer la compacité globale de l'installation. En effet, le flottateur est compact tout comme le bioréacteur à lit mobile. En outre, l'injection directe dans le flottateur permet de s'affranchir du contacteur.

Bien entendu, l'injection d'ozone et/ou de composé adsorbant peut aussi être réalisée directement dans le réacteur biologique 3, comme représenté avec la référence 11. Ce mode présente l'avantage de ne pas nécessiter l'utilisation d'un contacteur et donc de proposer une solution compacte, maximiser les performances de traitement du réacteur biologique par rapport à un traitement biologique seul (en effet, grâce à l'adsorbant, on peut agir sur des composés que la biologie seule du réacteur biologique n'aurait pas pu métaboliser) et d'éliminer un spectre plus important de composés organiques et inorganiques.

Dans un mode de réalisation préférentiel, on privilégiera l'introduction de charbon actif (ou tout autre adsorbant) dans le réacteur biologique et l'introduction d'ozone en amont du réacteur biologique.

Un autre mode de réalisation préférentiel pourra notamment prévoir l'injection du charbon actif dans le bioréacteur à lit mobile fluidisé et de prévoir l'injection d'ozone dans le flottateur. Le charbon actif permet d'augmenter la performance du traitement biologique en augmentant la surface disponible pour l'adsorption. L'ozone a ensuite pour fonction de traiter les composés solubles présents au niveau du flottateur qui n'ont pas été adsorbés. Il ne reste plus qu'à séparer l'eau et les boues, puis les boues du charbon actif.

Selon un autre mode préférentiel de l'invention, le premier et le deuxième dispositif d'introduction sont agencés pour introduire respectivement de l'ozone et un composé adsorbant, dans le circuit d'arrivée 1 et dans l'unité de traitement biologique 10. De cette façon, il n'est pas prévu d'introduire de l'ozone ou du composé adsorbant dans le circuit d'évacuation 9. Cette configuration permet d'éviter de recourir à un contacteur spécifique, qui est rendu incontournable si l'introduction d'ozone ou de charbon actif a lieu en aval de l'unité 10, c'est-à-dire dans le circuit d'évacuation 9. De ce fait, les configurations représentées aux FIGURES 1E, 1G, 1H présentent l'avantage d'être moins contraignantes en termes d'ouvrage.

De manière également avantageuse, le premier dispositif d'introduction d'ozone est agencé en amont du deuxième dispositif d'introduction d'adsorbant. Ainsi, le composé adsorbant piège d'avantage de composés organiques réfractaires à l'oxydation ou à la bio-transformation, dans la mesure où l'étape d'ozonation a déjà dégradé un certain nombre de composés organiques.

A titre d'exemple, le Tableau 1 résume, pour un certain nombre de composés, leurs caractéristiques chimiques et en particulier la constante KO3 à relier avec l'affinité à l'ozone moléculaire, le coefficient Log Kow à relier avec l'adsorbabilité sur charbon actif et finalement, la biodégradabilité.

Parmi les composés sélectionnés, l'ibuprofène est le seul qui soit bien dégradé par un système biologique mais peu adsorbable et oxydable. L'atrazine et le diuron sont eux peu biodégradables et oxydables mais bien adsorbés sur charbon actif. Finalement, le sulfaméthoxazole est lui très réactif à l'ozone mais peu adsorbable et peu biodégradable.

**Tableau 1. Caractéristiques physico-chimiques des composés indicateurs.**

| Nom | Famille | Classe | Log Kow | kO3 (M⁻¹.s⁻¹) | Biodégra -dabilité | Adsorbabilité | Réactivité à l'ozone |
|---|---|---|---|---|---|---|---|
| Atrazine | Pesticide | Triazine | 2.2 | 6 | faible | forte | faible |
| Diuron | Pesticide | Urée Substitué | 2.8 | 14.7 | faible | forte | faible |
| Ibuprofène | Parmaceutique | Analgésique | 3.8 | 9.6 | forte | faible | faible |
| Sulfaméthoxazole | Parmaceutique | Antibiotique | 0.89 | 2.5 10⁶ | faible | faible | forte |

Le Tableau 2 regroupe les rendements d'élimination obtenus pour l'atrazine, le diuron, l'ibuprofène et le sulfamethoxazole par le traitement biologique (biologie), le traitement intégré combinant l'ozonation sur l'alimentation du traitement biologique suivi du traitement biologique (O3 plus biologie), le traitement d'ozonation en tertiaire (O3 tertiaire), le traitement intégré par charbon actif en poudre dans le traitement biologique plus le traitement biologique (CAP plus biologie) et finalement, le traitement par charbon actif en poudre en tertiaire (CAP tertiaire). La dernière colonne concerne la proposition de la présente invention et par la couleur est indiquée la capacité d'un traitement combinant la biologie, le charbon actif et l'ozone à éliminer chacun de ces composés.

Dans le cas de l'ibuprofène, le traitement biologique seul permet d'obtenir des rendements d'élimination supérieurs à 90 %. L'addition d'un traitement à l'ozone en tertiaire ou d'un charbon actif en poudre en tertiaire améliorerait partiellement son élimination mais ils ne sont pas nécessaires puisque déjà très bien éliminée par le traitement biologique.

Par ailleurs, l'atrazine et le diuron sont mal éliminés par le traitement biologique seul, respectivement 25 et 12 %. L'ajout d'ozone, que ce soit dans l'alimentation du système biologique ou en tertiaire ne permet pas d'obtenir des rendements supérieurs à 50 % à faibles taux de traitement. Ces résultats sont conformes avec la faible biodégradabilité et la faible réactivité vis-à-vis de l'ozone de ces composés. En revanche, lorsque du charbon actif en poudre est ajouté en tertiaire, les rendements d'élimination sont bien meilleurs, 60 et 87 % pour l'atrazine et le diuron respectivement, à ajouter aux éliminations obtenues par le système biologique. Dans le cas de ces composés, l'addition de charbon actif en poudre permet d'obtenir de très bons rendements d'élimination alors que le système biologique comme l'ajout d'ozone ne sont pas efficaces.

Finalement, le sulfamethoxazole est moyennement éliminé par le traitement biologique (65 %) et avec beaucoup de variabilité, l'ajout de 20 mg/L de charbon actif en poudre dans la biologie n'améliore que très faiblement ce rendement pour atteindre 71 % et l'ajout de charbon actif en poudre en tertiaire de 10 mg/L de charbon actif en poudre entraine un abattement médiocre de 44 %. Seul l'ozone, que ce soit en amont du système biologique à 3 mg/L ou en tertiaire à 4,5 mg/L, est capable d'éliminer significativement ce composé, respectivement 99 et 91 %. Pour cette substance, ni le traitement biologique, ni l'ajout de charbon actif en poudre ne permette de l'éliminer efficacement contrairement à l'ajout d'ozone.

Il est montré au travers de cet exemple que l'association de seulement deux mécanismes d'élimination ne suffit pas à couvrir l'ensemble des micropolluants organiques. En revanche, il apparaît que la combinaison des trois mécanismes, en particulier la biodégradation, l'oxydation et l'adsorption, est efficace pour couvrir la bonne élimination de l'ensemble de ces composés, et ce, en utilisant des faibles doses de réactifs.

**Tableau 2: Exemple de rendements d'élimination pour chaque composé par les traitements biologique, charbon actif en poudre et ozone intégrés et charbon actif en poudre et ozone en tertiaire.**

| Composé | Biologie | O3 plus biologie | Ozonation tertiaire | CAP plus biologie | CAP tertiaire | Combinaison biologie, ozone et charbon actif |
|---|---|---|---|---|---|---|
| | | 3 mgO3/L | 4.5 mgO3/L | 20 mgCAP/L | 10 mgCAP/L | (^{∗}) |
| Atrazine | 25 % | 43 % | 20 % | 40% | 60% | >77% |
| Diuron | 12% | 5 % | 25 % | 40% | 87 % | >90 % |
| Ibuprofène | > 90 % | >97 % | 70 % | > 97 % | 32% | >99 % |
| Sulfaméthoxazole | 65 % | 99 % | 91 % | 71 % | 44% | > 99 % |

| | | | | | | |
|---|---|---|---|---|---|---|
| (^{∗}) avec 3 mgO3/L en aval du traitement biologique et 5 mgCAP/L et 1,3 mgO3/g en boues re-circulées dans le traitement biologique. | | | | | | |

En résumé, l'application en simultanée de l'ozone et du charbon actif en poudre autour et/ou dans le système biologique secondaire permet de couvrir une plus large gamme de micropolluants, c'est-à-dire à la fois ceux qui sont réactifs à l'ozone et ceux qui sont adsorbables sur charbon actifs.

De plus, l'invention permet d'obtenir des résultats très performants quant au traitement des micropolluants. Quand l'art antérieur ne fait intervenir que l'un ou l'autre des réactifs, ozone ou charbon actif, les doses desdits réactifs à appliquer pour éliminer des composés peu ou pas oxydables ou adsorbables, respectivement, doivent être fortement augmentées. Au contraire, l'application simultanée des deux réactifs rend possible l'élimination des substances peu ou pas oxydables via l'adsorption et inversement de composés peu ou pas adsorbables via l'oxydation. Les doses des réactifs mises en jeu dans l'innovation peuvent donc être optimisées en fonction des composés à traiter.

La réduction des doses d'ozone et de charbon actif dans le cas d'une application simultanée par rapport à l'application d'un seul des deux réactifs présente aussi des avantages quant à la production des boues pour le charbon actif et à la formation des sous-produits potentiels pour l'ozone lorsque ce dernier est appliqué en tertiaire. L'utilisation d'une dose plus faible de charbon actif entraine la réduction de charbon actif usagé sous forme de boues à extraire du système et à traiter ultérieurement. Dans le cas de l'ozonation tertiaire, la réduction de la dose d'ozone à des doses inférieures à la demande immédiate en ozone limite la formation de sous-produits toxiques, notamment de bromates. De plus, si cette formation des sous-produits avait lieu, le système simultané a l'avantage d'avoir l'activité d'oxydation biologique au cœur du traitement pour pouvoir les métaboliser/neutraliser.

L'injection d'ozone et l'addition de charbon actif en amont ou dans la biologie permet de s'affranchir des ouvrages spécifiques de contact et de séparation (dans le cas du charbon actif en poudre). Les coûts de constructions et les emprises au sol sont ainsi fortement diminués et les performances du système global augmentés.

Bien sûr, l'invention n'est pas limitée aux exemples qui viennent d'être décrits et de nombreux aménagements peuvent être apportés à ces exemples sans sortir du cadre de l'invention couvert par la portée des revendications. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres et dans la mesure où ils n'étendent pas au-delà de la portée des revendications.

## Revendications

1. Procédé de traitement des eaux usées comprenant au moins une étape d'oxydation biologique dans une unité (10) de traitement biologique, l'unité de traitement biologique (10) comprenant un réacteur biologique (3), un séparateur (4) du type décanteur ou flottateur, en aval du réacteur biologique (3) et un circuit (6) de recirculation d'une fraction des boues issues de l'étape de décantation ou flottation vers le réacteur biologique (3), le procédé étant **caractérisé en ce que** :
- on introduit de l'ozone et un composé adsorbant, dans le circuit de recirculation (6) ou dans le séparateur (4), ou bien dans les deux,
- et on introduit en outre de l'ozone (O3) et/ou un composé adsorbant (PAC) en amont de l'unité de traitement biologique (10), et/ou dans le réacteur (3), et/ou en aval de l'unité de traitement biologique (10), sachant qu'en aval de l'unité de traitement biologique (10), lorsqu'on procède à l'introduction d'ozone, on n'introduit pas de composé adsorbant, et lorsqu'on procède à l'introduction de composé adsorbant, on n'introduit pas d'ozone.

2. Procédé de traitement des eaux usées selon la revendication 1, **caractérisé en ce qu'**en aval de l'unité de traitement biologique (10), on ne procède à aucune introduction d'ozone ou de composé adsorbant, de sorte que l'ozone et le composé adsorbant sont respectivement chacun introduit en amont de l'unité de traitement biologique (10), et dans l'unité de traitement biologique (10).

3. Procédé de traitement des eaux usées selon l'une quelconque des revendications 1 ou 2, **caractérisé en ce que** l'introduction du composé adsorbant s'effectue en aval de l'introduction de l'ozone.

4. Procédé de traitement des eaux usées selon l'une quelconque des revendications 1 à 3, **caractérisé en ce que** le composé adsorbant comporte du charbon actif en poudre, en grain ou en micro grain.

5. Procédé de traitement des eaux usées selon l'une quelconque des revendications 1 à 4, **caractérisé en ce que** l'ozone est introduit dans des proportions allant de 0 à 25 mg/L, de préférence entre 1,5 et 15mg/1.

6. Procédé de traitement des eaux usées selon l'une quelconque des revendications 1 à 5, **caractérisé en ce que** le composé adsorbant est introduit dans des proportions allant de 0 à 30 mg/L, de préférence entre 5 et 20 mg/L.

7. Procédé de traitement des eaux usées selon l'une quelconque des revendications 1 à 6, **caractérisé en ce que** l'étape d'oxydation biologique est réalisée dans une unité de traitement biologique (10) comprenant un réacteur biologique (3) à boues activées conventionnel ou un réacteur à lit fixe.

8. Procédé de traitement des eaux usées selon l'une quelconque des revendications 1 à 6, **caractérisé en ce que** l'étape d'oxydation biologique est réalisée dans une unité de traitement biologique (10) comprenant un réacteur à lit mobile fluidisé.

9. Procédé de traitement des eaux usées selon l'une quelconque des revendications 1 à 8, **caractérisé en ce que** l'unité de traitement biologique (10) comprend un séparateur (4) du type décanteur ou flottateur en aval du réacteur biologique (3), l'introduction d'ozone et/ou de composé adsorbant, étant effectuée dans le séparateur.

10. Procédé de traitement des eaux usées selon l'une quelconque des revendications 7 ou 8, **caractérisé en ce que** l'introduction d'ozone et/ou de composé adsorbant, est effectuée dans le réacteur biologique (3).

11. Installation de traitement des eaux usées pour la mise en œuvre d'un procédé conforme à l'une des revendications 1 à 10, et comprenant :
- une unité de traitement biologique (10) dotée d'un réacteur biologique (3) agencé pour réaliser au moins une étape d'oxydation biologique, un séparateur (4) en aval du réacteur biologique (3) le séparateur étant du type décanteur ou flottateur, et un circuit (6) de recirculation d'une fraction des boues issues du séparateur (4) vers le réacteur biologique (3),
- un circuit d'arrivée (1) d'eaux usées alimentant l'unité de traitement biologique en eaux résiduaires,
- un circuit d'évacuation (9) des eaux traitées hors de ladite unité de traitement biologique,
**caractérisée en ce qu'**elle comprend au moins un premier et un deuxième dispositifs, l'un et l'autre du premier et du deuxième dispositif d'introduction étant en communication avec le séparateur (4), le circuit de recirculation (6) et/ou le réacteur (3), pour introduire respectivement de l'ozone et un composé adsorbant, dans l'unité de traitement biologique (10), le circuit d'évacuation (9) étant tout au plus en communication de fluide avec l'un ou l'autre du premier ou du deuxième dispositif d'introduction, le premier et/ou le deuxième dispositif d'introduction étant en communication avec le circuit d'arrivée (1), pour introduire respectivement de l'ozone et un composé adsorbant dans le circuit d'arrivée, et/ou le premier dispositif mais pas le deuxième dispositif d'introduction étant en outre en communication avec le circuit d'évacuation (9), pour introduire de l'ozone dans le circuit d'évacuation, et/ou le deuxième dispositif mais pas le premier dispositif d'introduction étant en outre en communication avec le circuit d'évacuation (9), pour introduire un composé adsorbant dans le circuit d'évacuation.

12. Installation de traitement des eaux usées selon la revendication 11, **caractérisée en ce que** le premier et le deuxième dispositif d'introduction sont agencés pour introduire respectivement de l'ozone et un composé adsorbant, dans le circuit d'arrivée (1) et dans l'unité de traitement biologique (10).

13. Installation de traitement des eaux usées selon l'une quelconque des revendications 11 ou 12, **caractérisée en ce que** le premier dispositif d'introduction d'ozone est agencé en amont du deuxième dispositif d'introduction d'adsorbant.

14. Installation de traitement des eaux usées selon l'une quelconque des revendications 11 à 13 exceptée 12, **caractérisée en ce qu'**il comporte en aval de l'unité de traitement biologique (10), en communication avec le premier ou bien le deuxième dispositif d'introduction, un contacteur (8) agencé pour mettre en contact les eaux en sortie de ladite unité avec soit l'ozone, soit le composé adsorbant.

15. Installation de traitement des eaux usées selon l'une quelconque des revendications 11 à 14, **caractérisée en ce que** le réacteur biologique (3) est un réacteur à boues activées conventionnel ou un réacteur à lit fixe.

16. Installation de traitement des eaux usées selon l'une quelconque des revendications 11 à 14, **caractérisée en ce que** le réacteur biologique (3) est un réacteur à lit mobile fluidisé.

17. Installation de traitement des eaux usées selon l'une quelconque des revendications 15 ou 16, **caractérisée en ce que** l'un et/ou l'autre du premier ou du deuxième dispositif d'introduction d'ozone ou d'adsorbant est en communication avec le réacteur biologique (3).

## Patentansprüche

1. Verfahren zur Aufbereitung von Abwasser, das zumindest einen Schritt zur biologischen Oxidation in einer biologischen Aufbereitungseinheit (10) umfasst, wobei die biologische Aufbereitungseinheit (10) einen biologischen Reaktor (3), einen Abscheider (4) vom Typ Dekantervorrichtung oder Flotationsvorrichtung stromabwärts des biologischen Reaktors (3), und einen Kreislauf (6) zur Rezirkulation einer Fraktion des Schlamms aus dem Dekantier- oder Flotationschritt zum biologischen Reaktor (3) aufweist, wobei das Verfahren **dadurch gekennzeichnet ist, dass**:
- Ozon und eine adsorbierende Verbindung in den Rezirkulationskreislauf (6) oder in den Abscheider (4) oder auch in beide eingeführt werden,
- und außerdem Ozon (O3) und/oder eine adsorbierende Verbindung (PAC) stromaufwärts der biologischen Aufbereitungseinheit (10) und/oder in den Reaktor (3) und/oder stromabwärts der biologischen Aufbereitungseinheit (10) eingeführt wird, wobei stromabwärts der biologischen Aufbereitungseinheit (10), wenn Ozon eingeführt wird, keine adsorbierende Verbindung eingeführt wird, und wenn eine adsorbierende Verbindung eingeführt wird, kein Ozon eingeführt wird.

2. Verfahren zur Aufbereitung von Abwasser nach Anspruch 1, **dadurch gekennzeichnet, dass** stromabwärts der biologischen Aufbereitungseinheit (10) weder Ozon noch eine adsorbierende Verbindung eingeführt werden, so dass das Ozon und die adsorbierende Verbindung jeweils stromaufwärts der biologischen Aufbereitungseinheit (10) und in die biologische Aufbereitungseinheit (10) eingeführt werden.

3. Verfahren zur Aufbereitung von Abwasser nach einem der Ansprüche 1 oder 2, **dadurch gekennzeichnet, dass** die Einführung der adsorbierenden Verbindung stromabwärts der Einführung des Ozons erfolgt.

4. Verfahren zur Aufbereitung von Abwasser nach einem der Ansprüche 1 bis 3, **dadurch gekennzeichnet, dass** die adsorbierende Verbindung Pulveraktivkohle, Granulataktivkohle oder Mikrogranulataktivkohle enthält.

5. Verfahren zur Aufbereitung von Abwasser nach einem der Ansprüche 1 bis 4, **dadurch gekennzeichnet, dass** das Ozon in Mengen von 0 bis 25 mg/L, vorzugsweise zwischen 1,5 und 15 mg/L eingeführt wird.

6. Verfahren zur Aufbereitung von Abwasser nach einem der Ansprüche 1 bis 5, **dadurch gekennzeichnet, dass** die adsorbierende Verbindung in Mengen von 0 bis 30 mg/L, vorzugsweise zwischen 5 und 20 mg/L eingeführt wird.

7. Verfahren zur Aufbereitung von Abwasser nach einem der Ansprüche 1 bis 6, **dadurch gekennzeichnet, dass** der Schritt zur biologischen Oxidation in einer biologischen Aufbereitungseinheit (10) realisiert wird, die einen herkömmlichen biologischen Reaktor (3) mit Belebtschlamm oder einen Festbettreaktor aufweist.

8. Verfahren zur Aufbereitung von Abwasser nach einem der Ansprüche 1 bis 6, **dadurch gekennzeichnet, dass** der Schritt zur biologischen Oxidation in einer biologischen Aufbereitungseinheit (10) realisiert wird, die einen Fließbettreaktor aufweist.

9. Verfahren zur Aufbereitung von Abwasser nach einem der Ansprüche 1 bis 8, **dadurch gekennzeichnet, dass** die biologische Aufbereitungseinheit (10) einen Abscheider (4) vom Typ Dakantervorrichtung oder Flotationsvorrichtung stromabwärts des biologischen Reaktors (3) aufweist, wobei die Einführung von Ozon und/oder der adsorbierenden Verbindung in den Abscheider erfolgt.

10. Verfahren zur Aufbereitung von Abwasser nach einem der Ansprüche 7 oder 8, **dadurch gekennzeichnet, dass** die Einführung von Ozon und/oder der adsorbierenden Verbindung in den biologischen Reaktor (3) erfolgt.

11. Anlage zur Aufbereitung von Abwasser zur Umsetzung eines Verfahrens nach einem der Ansprüche 1 bis 10, die aufweist:
- eine biologische Aufbereitungseinheit (10) mit einem biologischen Reaktor (3), der so angeordnet ist, dass er mindestens einen Schritt zur biologischen Oxidation durchführt, einem Abscheider (4) stromabwärts des biologischen Reaktors (3), wobei der Abscheider vom Typ Dakantervorrichtung oder Flotationsvorrichtung ist, und einen Kreislauf (6) zur Rezirkulation einer Fraktion des Schlamms aus dem Abscheider (4) zum biologischen Reaktor (3),
- einen Zuführkreislauf (1) für Abwasser, welcher der biologischen Aufbereitungseinheit Abwasser zuführt,
- einen Abführkreislauf (9) für aufbereitetes Wasser aus der biologischen Aufbereitungseinheit,
**dadurch gekennzeichnet, dass** die Anlage mindestens eine erste und eine zweite Einführvorrichtung aufweist, wobei die eine und die andere der ersten oder der zweiten Einführvorrichtung mit dem Abscheider (4), dem Rezirkulationskreislauf (6) und/oder dem Reaktor (3) in Verbindung steht, um Ozon bzw. eine adsorbierende Verbindung in die biologische Aufbereitungseinheit (10) einzuführen, wobei der Abführkreislauf (9) höchstens mit der einen oder der anderen der ersten oder der zweiten Einführvorrichtung in Fluidverbindung steht, wobei die erste und/oder die zweite Einführvorrichtung mit dem Zuführkreislauf (1) in Verbindung steht, um Ozon bzw. eine adsorbierende Verbindung in den Zuführkreislauf einzuführen, und/oder wobei die erste, aber nicht die zweite Einführvorrichtung außerdem mit dem Abführkreislauf (9) in Verbindung steht, um Ozon in den Abführkreislauf einzuführen, und/oder wobei die zweite, aber nicht die erste Einführvorrichtung außerdem mit dem Abführkreislauf (9) in Verbindung steht, um eine adsorbierende Verbindung in den Abführkreislauf einzuführen.

12. Anlage zur Aufbereitung von Abwasser nach Anspruch 11, **dadurch gekennzeichnet, dass** die erste und die zweite Einführvorrichtung so angeordnet sind, dass sie Ozon bzw. eine adsorbierende Verbindung in den Zuführkreislauf (1) und in die biologische Aufbereitungseinheit (10) einführen.

13. Anlage zur Aufbereitung von Abwasser nach einem der Ansprüche 11 oder 12, **dadurch gekennzeichnet, dass** die erste Vorrichtung zur Einführung von Ozon stromaufwärts der zweiten Vorrichtung zur Einführung des Adsorptionsmittels angeordnet ist.

14. Anlage zur Aufbereitung von Abwasser nach einem der Ansprüche 11 bis 13, abgesehen von Anspruch 12, **dadurch gekennzeichnet, dass** die Anlage stromabwärts der biologischen Aufbereitungseinheit (10), die mit der ersten oder auch der zweiten Einführvorrichtung in Verbindung steht, ein Schütz (8) aufweist, das so angeordnet ist, dass es das Wasser am Ausgang der Einheit entweder mit dem Ozon oder der adsorbierenden Verbindung in Kontakt bringt.

15. Anlage zur Aufbereitung von Abwasser nach einem der Ansprüche 11 bis 14, **dadurch gekennzeichnet, dass** der biologische Reaktor (3) ein herkömmlicher Reaktor mit Belebtschlamm oder ein Festbettreaktor ist.

16. Anlage zur Aufbereitung von Abwasser nach einem der Ansprüche 11 bis 14, **dadurch gekennzeichnet, dass** der biologische Reaktor (3) ein Fließbettreaktor ist.

17. Anlage zur Aufbereitung von Abwasser nach einem der Ansprüche 15 oder 16, **dadurch gekennzeichnet, dass** die eine und/oder die andere der ersten oder der zweiten Vorrichtung zur Einführung von Ozon oder Adsorptionsmittel mit dem biologischen Reaktor (3) in Verbindung steht.

## Claims

1. A wastewater treatment process comprising at least one biological oxidation step in a biological treatment unit (10), the biological treatment unit (10) comprising a biological reactor (3), a separator (4) of the settling or flotation type, downstream of the biological reactor (3), and a circuit (6) for recirculating a fraction of the sludge resulting from the settling or flotation step to the biological reactor (3), the process being **characterised in that**:
- ozone and an adsorbent compound are introduced into the recirculation circuit (6) or into the separator (4), or into both,
- and ozone (03) and/or an adsorbent compound (PAC) is additionally introduced upstream of the biological treatment unit (10), and/or into the reactor (3), and/or downstream of the biological treatment unit (10), wherein downstream of the biological treatment unit (10), when ozone is introduced, no adsorbent compound is introduced, and when the adsorbent compound is introduced, no ozone is introduced

2. The wastewater treatment process according to claim 1, **characterised in that** downstream of the biological treatment unit (10), no ozone or adsorbent compound is introduced, so that ozone and adsorbent compound are each introduced upstream of the biological treatment unit (10), and into the biological treatment unit (10) respectively.

3. The wastewater treatment process according to any one of claims 1 or 2, **characterised in that** the introduction of the adsorbent compound is downstream of the introduction of the ozone.

4. The wastewater treatment process according to any one of claims 1 to 3, **characterised in that** the adsorbent compound comprises powdered, granular or micro-grained powered activated carbon.

5. The wastewater treatment process according to any one of claims 1 to 4, **characterised in that** the ozone is introduced in proportions ranging from 0 to 25 mg/L, preferably between 1.5 and 15mg/l.

6. The wastewater treatment process according to any one of claims 1 to 5, **characterised in that** the adsorbent compound is introduced in proportions ranging from 0 to 30 mg/L, preferably between 5 and 20 mg/L.

7. The wastewater treatment process according to any one of claims 1 to 6, **characterized in that** the biological oxidation step is carried out in a biological treatment unit (10) comprising a conventional activated sludge biological reactor (3) or a fixed bed reactor.

8. The wastewater treatment process according to any one of claims 1 to 6, **characterized in that** the biological oxidation step is carried out in a biological treatment unit (10) comprising a fluidized moving bed reactor.

9. The wastewater treatment process according to any one of claims 1 to 8, **characterised in that** the biological treatment unit (10) comprises a separator (4) of the settler or flotation type downstream of the biological reactor (3), the introduction of ozone and/or adsorbent compound being carried out in the separator.

10. The wastewater treatment process according to any of claims 7 or 8, **characterised in that** the introduction of ozone and/or adsorbent compound, is carried out in the biological reactor (3).

11. A wastewater treatment plant for carrying out a process according to any of claims 1 to 10, and comprising :
- a biological treatment unit (10) provided with a biological reactor (3) arranged to carry out at least one biological oxidation stage, a separator (4) downstream of the biological reactor (3), the separator being of the settler or flotation type, and a circuit (6) for recirculating a fraction of the sludge from the separator (4) to the biological reactor (3)
- an inlet circuit (1) for wastewater supplying the biological treatment unit with wastewater
- a circuit (9) for discharging the treated water from the said biological treatment unit,
**characterised in that** it comprises at least a first and a second device, both the first and the second introduction device being in communication with the separator (4), the recirculation circuit (6) and/or the reactor (3), for introducing ozone and an adsorbent compound, respectively, into the biological treatment unit (10), the discharge circuit (9) being at most in fluid communication with one or the other of the first or the second introduction device, the first and/or the second introduction device being in communication with the inlet circuit (1), for introducing ozone and an adsorbent compound respectively into the inlet circuit, and/or the first but not the second introduction device being further in communication with the outlet circuit (9), for introducing ozone into the outlet circuit (9), and/or the second but not the first introduction device being further in communication with the outlet circuit, for introducing an adsorbent compound into the outlet circuit.

12. The wastewater treatment plant according to claim 11, **characterized in that** the first and the second introduction device are arranged to introduce ozone and an adsorbent compound, respectively, into the inlet circuit (1) and into the biological treatment unit (10).

13. The wastewater treatment plant according to any of claims 11 or 12, **characterised in that** the first ozone introduction device is arranged upstream of the second adsorbent introduction device.

14. The wastewater treatment plant according to any one of claims 11 to 13 except 12, **characterised in that** it comprises downstream of the biological treatment unit (10), in communication with the first or the second introduction device, a contactor (8) arranged to bring the water leaving said unit into contact with either the ozone or the adsorbent compound.

15. The wastewater treatment plant according to any one of claims 11 to 14, **characterised in that** the biological reactor (3) is a conventional activated sludge reactor or a fixed bed reactor.

16. The wastewater treatment plant according to any one of claims 11 to 14, **characterized in that** the biological reactor (3) is a fluidized moving bed reactor.

17. The wastewater treatment plant according to any one of claims 15 or 16, **characterized in that** either the first or the second ozone or adsorbent introduction device is in communication with the biological reactor (3).
